# EUROPEAN PATENT APPLICATION

(11) **EP 4 364 840 A1**
(43) Date of publication of application: **08.05.2024**
(21) Application number: 22832708.6
(22) Date of filing: 03.06.2022
(51) Int. Cl.: B01J 20/282, B01D 15/34, B01J 20/281, B01J 20/285, B01J 20/30

(54) **FILLER AND MANUFACTURING METHOD THEREFOR, AND COLUMN FOR SIZE EXCLUSION CHROMATOGRAPHY**

(30) Priority: 29.06.2021 JP 2021107862
(71) Applicant: Resonac Corporation, Tokyo (JP)
(72) Inventor: UCHIYAMA, Naoki, Tokyo 105-8518 (JP); KOKIDO, Yuzuru, Tokyo 105-8518 (JP)
(74) Representative: Strehl Schübel-Hopf & Partner
(86) International application number: PCT/JP2022/022598
(87) International publication number: WO 2023/276550

(57) **Abstract**

Provided are a packing material used for size exclusion chromatography, which has high alkali resistance and suppressed non-specific adsorption, and a method for producing the same.

A packing material, wherein one end of a block copolymer represented by the following formula 1 is bonded to a porous organic polymer carrier containing 60 to 95 mol% of a repeating unit derived from glycidyl methacrylate and 5 to 40 mol% of a repeating unit derived from a polyfunctional monomer via an ether bond derived from a terminal hydroxyl group,

(formula 1) HO-(C₂H₄O)ₗ-(C₃H₆O)ₘ-(C₂H₄O)ₙ-H

wherein 1 is an integer of 5 to 140, m is an integer of 15 to 75, and n is an integer of 5 to 140, and a proportion of m to a sum of 1, m, and n is 5 to 85%.

## Description

### Technical Field

The present invention relates to a packing material for size exclusion chromatography for protein purification. More particularly, the present invention relates to a packing material having high alkali resistance.

### Background Art

Size exclusion chromatography, which separates a molecule in order of size thereof, is widely used to separate a water-soluble polymer such as a polysaccharide, a peptide, a protein, DNA, or RNA. Particularly in the case of separation and fractionation of a biopolymer such as a protein, size exclusion chromatography can treat the biopolymer under a mild condition, and thus has the advantage of being able to separate and fractionate the biopolymer with a low degree of denaturation. The separated and fractionated biopolymer is used in application to a biochemical reaction and in an industrial use such as in the food, pharmaceutical, or chemical industry, and the market therefor has been remarkably expanding and growing in recent years.

In order to meet the demand, a packing material for separation and fractionation applicable to treatment of a large volume appropriate to an industrial scale is desired. In particular, in the field of a gene therapy drug, for which the market is expected to expand in the future, a further improvement in a packing material function is desired in order to greatly improve the productivity of a purification process for a viral vector or a virus-like particle, for example. In particular, it is desired that such a packing material can be used for the precise separation and purification of a virus vector or a virus-like particle having a large molecular size, and that the precise size separation can be easily carried out through a series of steps from the culture solution to the purification.

Because of this, the packing material is desired: to have good fractionation efficiency at which a product separated and coming out can be recovered; for example, even when various components such as an impurity or an unknown component included in a biopharmaceutical derived from a fermentation product are included, to be able to suppress non-specific adsorption thereof; and further, to enable cleaning with a high-strength alkali and regeneration, which are different problems or requirements from those for the analytical column.

However, a packing material having such alkali resistance has not yet been proposed.

The present applicant has proposed a packing material for size exclusion chromatography using a methacrylate-based monomer in WO2018/155241 (Patent Literature 1). Patent Literature 1 discloses a packing material having undergone a step of polymerizing a monomer having a glycidyl group and a crosslinking agent in the presence of a polymerization initiator, hydrophilizing a porous particle made of the resulting copolymer using a sugar alcohol, and then ring-opening the residual glycidyl group using a mineral acid, but there is a demand for higher alkali resistance.

In addition, JP5315691 (Patent Literature 2) discloses a packing material obtained by hydrophilizing the surface of a crosslinked polymer particle using a monomer having a special structure among a methacrolyl monomer having improved resistance to an alkali aqueous solution. The monomer used in Patent Literature 2 is not a general-purpose monomer, and thus a problem is that the monomer is difficult to obtain easily and simply, resulting in high cost.

### Citation List

### Patent Literature

Patent Document 1: WO2018/155241
Patent Document 2: JP5315691

### Summary of Invention

### Problems to be resolved by the Invention

There are various reports as described above, but a packing material having high alkali resistance and suitable for fractionation is still desired.

An object of the present invention is to solve the above problem. More specifically, the object of the present invention is to provide a packing material for size exclusion chromatography having high alkali resistance and a method for producing the same.

### Means of solving the Problems

The present inventors have carried out intensive studies in order to solve the above problem and as a result have found that a packing material obtained by introducing a predetermined block copolymer into porous particles comprising a crosslinked copolymer of a monomer having a glycidyl group and a crosslinking agent has high alkali resistance, thereby completing the present invention. That is, the present invention relates to the following matters.
[1] A packing material, wherein one end of a block copolymer represented by the following formula 1 is bonded to a porous organic polymer carrier comprising 60 to 95 mol% of a repeating unit derived from glycidyl methacrylate and 5 to 40 mol% of a repeating unit derived from a polyfunctional monomer via an ether bond derived from a terminal hydroxyl group,

   (formula 1) HO-(C₂H₄O)ₗ-(C₃H₆O)ₘ-(C₂H₄O)ₙ-H

   wherein 1 is an integer of 5 to 140, m is an integer of 15 to 75, and n is an integer of 5 to 140, and a proportion of m to a sum of 1, m, and n is 5 to 85%.
[2] The packing material according to [1], wherein the sum of 1, m, and n of the block copolymer is 30 to 330.
[3] The packing material according to [1] or [2], wherein the polyfunctional monomer is a (meth)acryloyl-based monomer comprising two or more (meth)acryloyl groups.
[4] The packing material according to any one of [1] to [3], wherein the polyfunctional monomer is any of ethylene glycol dimethacrylate or glycerol 1,3-dimethacrylate.
[5] The packing material according to any one of [1] to [4], which has an exclusion limit molecular weight of 1,000,000 or more.
[6] A method for producing the packing material according to any one of [1] to [5], the method comprising:
   a step (A) of polymerizing a raw material monomer comprising glycidyl methacrylate and a polyfunctional monomer in the presence of a diluent and a polymerization initiator to obtain a porous organic polymer carrier α, wherein
   a concentration of the polyfunctional monomer in the raw material monomer is 5 mol% to 40 mol%, and the diluent is used in a volume of 0.8 times to 4.0 times a total volume of the raw material monomer; and
   a step (B) of ring-opening a glycidyl group derived from glycidyl methacrylate of the porous organic polymer carrier α with a block copolymer represented by the formula 1 to obtain a packing material β in which one end of the block copolymer represented by the formula 1 is bonded to the porous organic polymer carrier α via an ether bond derived from a terminal hydroxyl group,

      (formula 1) HO-(C₂H₄O)ₗ-(C₃H₆O)ₘ-(C₂H₄O)ₙ-H

      wherein 1 is an integer of 5 to 140, m is an integer of 15 to 75, and n is an integer of 5 to 140, and a proportion of m to a sum of l, m, and n is 5 to 85%.
[7] A column for size exclusion chromatography, comprising a housing for liquid chromatography and the packing material according to any one of [1] to [5] packed into the housing for liquid chromatography.

### Advantageous Effects of Invention

According to the present invention, a packing material having high alkali resistance and excellent in fractionation efficiency can be obtained. This can enhance the speed of the separation treatment. Further, the packing material can be produced from an inexpensive raw material by a simple step and can be easily applied to an industrial scale in which a large amount of a packing material is used.

### Description of Embodiments

Hereinafter, an embodiment of the present invention will be described in detail, but a material or a dimension, for example, given as examples in the following description are just examples, the present invention is not limited thereto, and the embodiment can be appropriately modified as long as the gist thereof is not changed, to be practiced.

The packing material encompasses one that can be used alone as a packing material, and one that can be used by modifying the surface depending on the purpose.

In addition, as used herein, "(meth)acryl" means acryl and methacryl, and the same also applies to "(meth)acryloyl."

### [Packing material]

The packing material of the present embodiment has a structure in which a specific skeleton is bonded to a porous organic polymer carrier α as shown below.

### (Porous organic polymer carrier α)

The porous organic polymer carrier α is constituted by a copolymer containing 60 to 95 mol% of a repeating unit derived from glycidyl methacrylate and 5 to 40 mol% of a repeating unit derived from a polyfunctional monomer. The porous organic polymer carrier α contains preferably a repeating unit derived from glycidyl methacrylate at a proportion of 65 to 95 mol% and a repeating unit derived from a polyfunctional monomer at a proportion of 5 to 35 mol%, and further preferably a repeating unit derived from glycidyl methacrylate at a proportion of 75 to 92 mol% and a repeating unit derived from a polyfunctional monomer at a proportion of 8 to 25 mol%. When the proportion of the repeating unit derived from a polyfunctional monomer is low, the final packing material may provide a high back pressure and be unsuitable for use, and when the proportion of the repeating unit derived from a polyfunctional monomer is high, non-specific adsorption may occur to make the intended fractionation impossible. The porous organic polymer carrier of the present embodiment can also be obtained by using glycidyl acrylate.

The polyfunctional monomer is a compound having two or more ethylenic double bonds in the molecule thereof. The polyfunctional monomer is preferably one having two or more (meth)acryloyl groups in the molecule thereof. Specific examples thereof include alkanediol di(meth)acrylate wherein the alkane has 1 to 12 carbon atoms, trimethylolpropane tri(meth)acrylate, ditrimethylolpropane tetra(meth)acrylate, pentaerythritol tetra(meth)acrylate, pentaerythritol penta(meth)acrylate, dipentaerythritol penta(meth)acrylate, and dipentaerythritol hexa(meth)acrylate, and also include polyfunctional urethane (meth)acrylate. These compounds may be used singly or in combinations of two or more.

It is preferable that the polyfunctional monomer contains at least any of ethylene glycol dimethacrylate or glycerol 1,3-dimethacrylate. Ethylene glycol dimethacrylate and/or glycerol 1,3-dimethacrylate may account for 50 mol% or more, based on the total amount of the polyfunctional monomer, accounts for preferably 80 mol% or more, and in view of forming pores suitable for fractionation, ethylene glycol dimethacrylate and/or glycerol 1,3-dimethacrylate most preferably accounts for the total amount.

The copolymer may include a further monomer unit in a range that does not greatly change a property of the porous particle as long as the copolymer includes 95 mol% or more in total of the glycidyl methacrylate and the polyfunctional monomer as monomer units. Examples of a monomer having a glycidyl group that can be used as a further monomer include 3,4-epoxycyclohexylmethyl methacrylate, 4-hydroxybutyl acrylate glycidyl ether, as well as methyl (meth)acrylate and ethyl (meth)acrylate.

The degree of crosslinking of the copolymer is 5 mol% to 40 mol%, preferably 5 mol% to 35 mol%, and more preferably 8 to 25 mol%.

The degree of crosslinking is represented by (Total number of moles of polyfunctional monomer/total number of moles of all monomers) × 100 = degree of crosslinking (mol%).

When the degree of crosslinking is low, the final packing material may be unsuitable for use because of the high back pressure of a column for size exclusion chromatography, and when the degree of crosslinking is high, non-specific adsorption may occur to make the intended fractionation impossible.

### (Surface structure)

In the present embodiment, a block copolymer represented by the following formula 1 is bonded to the porous organic polymer carrier α via an ether bond derived from a terminal hydroxyl group. That is, bonding is formed via an ether bond formed by the reaction between a glycidyl group derived from glycidyl methacrylate in the copolymer constituting the carrier and a terminal hydroxyl group of the block copolymer,

(formula 1) HO-(C₂H₄O)ₗ-(C₃H₆O)ₘ-(C₂H₄O)ₙ-H

wherein 1 is an integer of 5 to 140, m is an integer of 15 to 75, and n is an integer of 5 to 140, and a proportion of m to a sum of l, m, and n is 5 to 85%. 1 and n may be the same or different integers, and 1 > n or 1 < n. 1 is preferably an integer of 6 to 135, m is preferably of 16 to 70, and n is preferably of 6 to 135.

The C3 alkyl constituting (C₃H₆O) may be any of n-propyl and isopropyl, but isopropyl is preferred for enhancing the hydrophobicity.

That is, a highly hydrophilic block portion derived from (C₂H₄O)₁ or (C₂H₄O)ₙ, a highly hydrophobic block portion derived from (C₃H₈O)ₘ, and a highly hydrophilic block portion derived from (C₂H₄O)ₗ or (C₂H₄O)ₙ (which is not bonded to the carrier) are present on the carrier surfaces. By adopting such a structure, non-specific adsorption is suppressed, and a packing material having high alkali resistance can be obtained.

The proportion of m to the sum of l, m, and n of the block copolymer is 5 to 85%, preferably 10 to 75%, and more preferably 15 to 65%. Within this range, a packing material having particularly high alkali resistance and suppressed non-specific adsorption can be obtained.

The sum of l, m, and n of the block copolymer is preferably 30 to 330, and more preferably 35 to 200. Within this range, a packing material having particularly high alkali resistance and suppressed non-specific adsorption can be obtained.

The values of l, m and n can be calculated from the weights of the (C₂H₄O) portion and the (C₃H₈O) portion, for example, by referring to the catalog values of the companies based on Fig 2 and Table 1 in Journal of Japan Oil Chemists' Society, Vol. 49, No. 10, 1071.

As such a block copolymer, Pluronic (R) L, P, and F series manufactured by ADEKA Corporation and BASF can be used, and among them, L35, F38, L42, L43, L44, L62, L63, L64, L72, P65, F68, P75, F77, P84, P85, F87, F88, L92, P94, F98, P103, P104, P105, F108, L122, P123, and F127 can be used.

### (Properties of packing material)

A schematic structure of such a packing material of the present embodiment is represented, for example, as follows.

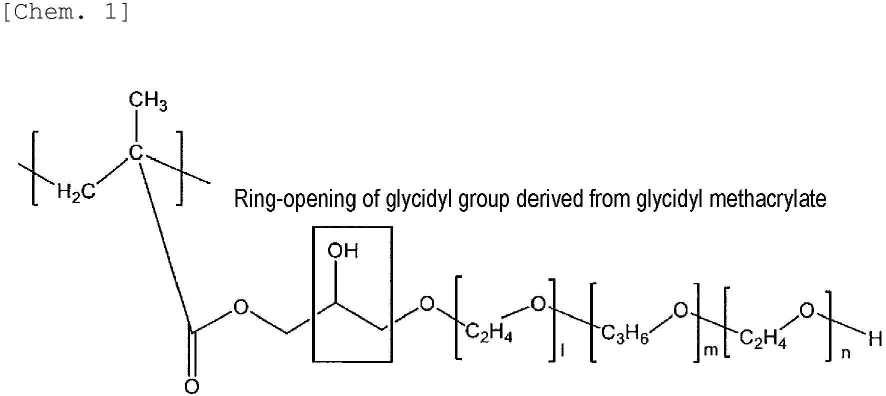

The average particle diameter of the packing material is not particularly limited as long as it is 10 um or more, and is preferably in the range of 15 to 100 um from the viewpoint of, for example, the column packing property. Here, the average particle diameter is represented by the volume-average particle diameter. The volume-average particle diameter is a value obtained using an image analysis-based particle size distribution measuring apparatus. When an image analysis-based particle size distribution measuring apparatus is used to measure the volume-average particle diameter, the volume-average particle diameter is a particle diameter obtained by imaging 2000 or more crosslinked polymer particles using the image analysis-based particle size distribution measuring apparatus to obtain two-dimensional particle images (preferably still images), obtaining the equivalent circle diameter (diameter of a circle having an area equal to the projected area of a particle) of each particle from the two-dimensional particle images, calculating the volume of the particle from the equivalent circle diameter, and averaging the diameters based on the volume. At this time, each particle is regarded as a sphere having the same diameter as the above equivalent circle diameter. Examples of the image analysis-based particle size distribution measuring apparatus that can be used include a flow particle image analyzer (trade name: FPIA-3000, manufactured by Sysmex Corporation). The average particle diameter of the packing material can be adjusted by adjusting the polymerization conditions during the production of the carrier.

The exclusion limit molecular weight of the packing material of the present embodiment is preferably 1,000,000 or more. The exclusion limit molecular weight is adjusted by the size of the pores of the packing material. The exclusion limit molecular weight can be determined by a generally known method by connecting a column packed with the packing material to a high-performance liquid chromatograph, allowing ion exchanged water as the mobile phase to flow at a flow rate of 1.0 mL per minute, injecting a reference material having various molecular weights into the column, and using the elution volume thereof. In the present embodiment, a differential refractive index detector (trade name: RI-201H, manufactured by Showa Denko K.K.) is used, and a pullulan standard (trade name: Shodex (R) STANDARD P-82, manufactured by Showa Denko K.K.) is used as the reference material.

In order to separate a large protein by size exclusion chromatography, the exclusion limit molecular weight is preferably 1,000,000 or more. For example, when a large protein such as IgM having a molecular weight of about 900,000 or IgG having a molecular weight of about 150,000 is separated, if the exclusion limit is less than 1,000,000, the molecular weight of IgM falls outside the exclusion limit and IgM cannot be separated.

The exclusion limit molecular weight can be adjusted by the type and amount of the diluent used during production described later, or the proportions of glycidyl methacrylate and the polyfunctional monomer. The average particle diameter and the pore diameter of the packing material do not vary depending on the surface structure.

### (Method for producing packing material)

A method for producing packing material of the present embodiment includes
a step (A) of polymerizing a raw material monomer comprising glycidyl methacrylate and a polyfunctional monomer in the presence of a diluent and a polymerization initiator to obtain a porous organic polymer carrier α, wherein
a concentration of the polyfunctional monomer in the raw material monomer is 5 mol% to 40 mol%, and the diluent is used in a volume of 0.8 times to 4.0 times the volume of the raw material monomer; and
a step (B) of ring-opening a glycidyl group derived from glycidyl methacrylate of the porous organic polymer carrier α with a block copolymer represented by the formula 1 to obtain a packing material β in which one end of the block copolymer represented by the formula 1 is bonded to the porous organic polymer carrier α via an ether bond derived from a terminal hydroxyl group.

### [Step (A)]

A porous organic polymer carrier α is prepared from a copolymer having glycidyl methacrylate and polyfunctional as monomer units. The porous organic polymer carrier α is obtained by copolymerizing these monomers in the presence of a diluent and a polymerization initiator. These porous particles can be produced with reference to the method described in JP2007-170907 or WO2006/132333, for example.

Desirably, the glycidyl methacrylate concentration of the raw material monomer is 60 to 95 mol%, and preferably 70 to 95 mol%. The concentration of the polyfunctional monomer in the raw material monomer is 5 mol% to 40 mol%, and preferably 5 mol% to 30 mol%.

In addition, as described above, a further monomer component may be included.

In order to introduce a pore into the porous organic polymer carrier α, in the step (A), a diluent is added to the monomer mixture, which is then polymerized. The diluent is an organic solvent having the property of being soluble in the monomer mixture, being inert to polymerization, and further, not dissolving the copolymer produced. By removing the diluent by, for example, cleaning after completion of polymerization, a portion occupied by the diluent is made hollow to form a porous pore in a particle of the porous organic polymer carrier α.

The amount of the diluent added affects the exclusion limit molecular weight and the percentage by volume of the pore volume (representing the proportion of the pore volume to the total volume of the packing material particles) of the packing material. Because of this, the diluent is added by appropriately regulating the amount thereof. The amount of these diluents added is used at a volume of 0.8 to 4.0 times, preferably 1.0 to 3.0 times, the total volume of the raw material monomers at the temperature at the time of supply.

Examples of the diluent that can be used include an aromatic hydrocarbon such as toluene, xylene, diethylbenzene, dodecylbenzene, or chlorobenzene; a saturated hydrocarbon such as hexane, heptane, pentane, octane, nonane, or decane; an alcohol such as isoamyl alcohol, hexyl alcohol, heptyl alcohol, octyl alcohol, or nonyl alcohol; an aliphatic halogenated hydrocarbon such as dichloromethane, dichloroethane, or trichloroethane; and an aliphatic or aromatic ester such as ethyl acetate, propyl acetate, butyl acetate, pentyl acetate, diethyl succinate, methyl benzoate, ethyl benzoate, or propyl benzoate. These diluents can be used singly or as a mixture of two or more.

The polymerization initiator used during polymerization is not particularly limited as long as it is a known radical polymerization initiator that generates radicals, and examples thereof include azo-based initiators such as 2,2'-azobisisobutyronitrile, 2,2'-azobis(methyl isobutyrate), and 2,2'-azobis(2,4-dimethylvaleronitrile). Among these, 2,2'-azobis(2,4-dimethylvaleronitrile) is desirably used from the viewpoint of the affinity of the chemical structure. The concentration of the polymerization initiator is not particularly limited, and is preferably 0.1 to 5 parts by mass per 100 parts by mass in total of the monomers.

An oil phase containing the raw material monomers is prepared using the raw material monomer mixture, the diluent, and the polymerization initiator. The oil phase is formed into oil droplets by stirring and suspending the oil phase in an aqueous medium containing an appropriate dispersion stabilizer. Polymerization in this state (suspension polymerization) generates a copolymer in the form of porous particles having appropriate particle diameters. Besides the method by stirring as described above, a method in which a monomer solvent containing the diluent is added dropwise to the aqueous medium through a porous membrane or a microchannel formed on a quartz substrate can be applied to the production method of oil droplets.

Known stabilizers can be used as the dispersion stabilizer contained in the aqueous medium. A water-soluble polymer compound such as gelatin, sodium polyacrylate, or polyvinyl alcohol is usually used. Polyvinyl alcohol is generally used. The concentration of the dispersion stabilizer is preferably 0.1 to 5 mass% based on the aqueous medium.

The aqueous medium may include a water-soluble component such as a salt in addition to water. Examples of the salt include a generally used salt such as sodium chloride or calcium chloride. The solubility differs among salts used and thus the concentration of a salt used cannot be unconditionally specified, and for example, it is also possible to use sodium chloride by dissolving the same at 0.1 to 15 mass% and calcium chloride by dissolving the same at 1 to 40 mass%. The salt is added for salting out.

The suspension polymerization reaction is carried out for 5 to 16 hours under atmospheric pressure after nitrogen gas purge and then usually heating to 40 to 100°C with stirring. At this time, the monomers included in each oil droplet are polymerized with the diluent included therein, and a polymer grows in the form of a network, and thus the diluent can subsequently be removed to obtain a porous particle. After the reaction, the porous particle can be easily separated from the aqueous medium by filtration, for example. Further, the porous particle is cleaned with a solvent such as acetone, methanol, or diethylene glycol dimethyl ether to remove the diluent. The porous particle is dried, then the resulting porous particle having a glycidyl group is classified using a sieve or an air classifier.

The copolymer thus obtained in the step (A) is a porous organic polymer particle having a glycidyl group derived from glycidyl methacrylate, and has the above average particle diameter and pore.

### [Step (B)]

Next, a glycidyl group derived from glycidyl methacrylate of the porous organic polymer carrier α is subjected to a ring-opening reaction with the block copolymer represented by the following formula 1.

As a result, a packing material β in which one end of the block copolymer represented by the formula 1 is bonded to the porous organic polymer carrier α via an ether bond derived from a terminal hydroxyl group.

As such block copolymers, Pluronic (R) L, P, and F series manufactured by ADEKA Corporation and BASF can be used, as described above.

The proportion of m in the sum of l, m, and n of the block copolymer and the sum of l, m, and n are as described above.

The amount of the block copolymer to be used is preferably 100 parts by mass to 8000 parts by mass based on 100 parts by mass of the porous organic polymer carrier α. When used in this range, it is possible to obtain a packing material having high alkali resistance and suppressed non-specific adsorption.

Examples of the catalyst that can be used for the ring-opening reaction include a boron trifluoride diethyl ether complex, zinc borofluoride, trimethylsilyltrifluoromethanesulfonic acid, sulfuric acid, trifluoromethanesulfonic acid, trifluoroacetic acid, and dichloroacetic acid. The amount of the catalyst is preferably 0.1 parts by mass to 100 parts by mass, and more preferably 0.5 parts by mass to 20 parts by mass, per 100 parts by mass of the porous organic polymer carrier α. Within this range, the block copolymer can be introduced, and the reaction of, for example, an ester group of the porous organic polymer carrier α can be prevented. The ring-opening reaction is usually carried out in the presence of a solvent. Diethylene glycol dimethyl ether can be used as the solvent, for example.

The obtained porous particles into which the block copolymer has been introduced (that is, the packing material β) are washed with dimethyl sulfoxide, for example, to remove excess block copolymer and catalyst, for example.

In addition, an unreacted glycidyl group may remain in the obtained packing material β, and when a glycidyl group remains, the hydrophobicity of the packing material increases, and there is concern that a highly hydrophobic water-soluble compound such as a protein is hydrophobically adsorbed. Because of this, in order to enhance the hydrophilicity, the remaining glycidyl group is desirably ring-opened using a mineral acid.

Examples of the mineral acid include sulfuric acid, nitric acid, and hydrochloric acid. Among these, sulfuric acid is particularly preferable. The concentration of the mineral acid used may be about 0.01 M to 1.0 M, and is particularly preferably about 0.1 to 0.5 M. If the concentration of the mineral acid is 0.01 M or more, the ring-opening is sufficiently carried out, and if the concentration of the mineral acid is 1.0 M or less, for example, an ester group in the carrier is not hydrolyzed to form an ionic functional group. By washing the resulting particle with water, the excess mineral acid is easily removed.

The packing material of the present embodiment has suitable hydrophilicity and exclusion limit molecular weight. Because of this, by packing the packing material into a housing for liquid chromatography, a high-performance column for size exclusion chromatography can be obtained, and further, a chromatography apparatus including the column for size exclusion chromatography can be obtained. In addition, by using this column for size exclusion chromatography, a method for separating and a method for fractionating a biopolymer that can precisely separate and further fractionate the biopolymer, respectively, using an aqueous eluent can be provided.

In addition, the packing material has high alkali resistance, and thus can be cleaned and reused, and can be used continuously for a long period of time.

### Examples

Hereinafter, the advantageous effects of the present invention will be made clearer with reference to Examples. The present invention is not limited to the following Examples and can be appropriately modified as long as the gist thereof is not changed, to be practiced.

### [Example 1]

### <Porous organic polymer carrier α: synthesis of copolymer having glycidyl group>

33.2 g of glycidyl methacrylate (trade name: Blemmer G (R) manufactured by NOF Corporation), 5.9 of ethylene glycol dimethacrylate (trade name: NK Ester 1G, SHIN-NAKAMURA CHEMICAL Co., Ltd.), and 11.7 g of chlorobenzene, and 1.9 g of 2,2'-azobis(2,4-dimethylvaleronitrile) were dissolved in 47.0 g of butyl acetate as a diluent, and nitrogen gas was bubbled for 30 minutes to provide an oil phase.

Next, separately from the oil phase, 10.0 g of PVA-224 (manufactured by Kuraray Co., Ltd., polyvinyl alcohol having a degree of saponification of 87.0% to 89.0%) as a dispersion stabilizer and 10.0 g of sodium chloride as a salting-out agent were dissolved in 480 g of water to provide an aqueous phase.

The aqueous phase and the oil phase were transferred to a separable flask and dispersed at a rotation speed of 430 rpm for 20 minutes using a stirring rod equipped with a half-moon stirring blade, then the inside of the reactor was purged with nitrogen, and the reaction was carried out at 60°C for 16 hours. After that, the resulting polymer was transferred onto a glass filter and thoroughly washed with hot water at about 50 to 80°C, acetone, and water in the order presented to obtain 125 g of a porous organic polymer carrier α1 as porous organic polymer particles. The amount of glycidyl methacrylate used was 88.7 mol% based on the total amount of the monomers, and the amount of ethylene glycol dimethacrylate used was 11.3 mol% based on the total amount of the monomers.

### <Ring-opening reaction of glycidyl group>

Onto a glass filter, 100 g of the porous organic polymer carrier α1 was weighed and thoroughly cleaned with diethylene glycol dimethyl ether. After washing, the porous organic polymer carrier α1 was transferred to a separable flask, and 400 g of diethylene glycol dimethyl ether and 400 g of block copolymer (manufactured by ADEKA Corporation, ADEKA Pluronic (R) L35, where 1 is 11, m is 16, n is 11, 1 + m + n is 38, and mill + m + n) is 43%) represented by HO-(C₂H₄O)₁-(C₃H₆O)ₘ-(C₂H₄O)ₙ-H were transferred to a 1 L separable flask and stirred and dispersed. Thereafter, 2.0 mL of a boron trifluoride diethyl ether complex was added, the temperature was raised to 80°C while stirring at 200 rpm, and the resulting mixture was subjected to the reaction for 4 hours, and the glycidyl group was ring-opened to obtain a packing material β1 in which one end of the block copolymer is bonded to the porous organic polymer carrier α1 via an ether bond derived from a terminal hydroxyl group. After cooling, the obtained packing material β1 was separated by filtration, and then sufficiently washed with water to obtain 138 g of the packing material β1.

The progress of the ring-open reaction was confirmed by the following procedure. A part of the packing material β1 into which the block copolymer had been introduced was mixed with potassium bromide, and the resulting mixture was pelletized by applying a pressure and then measured using FT-IR (trade name: Nicolet (R) 1S10, manufactured by Thermo Fisher Scientific Inc.) to check the height of a absorbance peak at 908 cm⁻¹ due to the glycidyl group in the infrared absorption spectrum. As a result, no absorbance peak at 908 cm⁻¹ was observed by FT-IR.

The obtained packing material β1 was classified into a particle size range of 16 to 37 um using a sieve to obtain 117.3 g of a packing material β1.

### <Evaluation of alkali resistance>

The alkali resistance was evaluated by calculating the amount of a carboxy group produced by hydrolysis of sodium hydroxide according to the following procedure.

First, 4 g of the packing material was dispersed in 150 mL of a 0.5 mol/L potassium chloride aqueous solution, and titration was carried out using 0.1 mol/L sodium hydroxide aqueous solution with the point at which the pH reached 7.0 as the neutralization point. From this, the amount of a carboxy group before hydrolysis included in the packing material was calculated from the following expression. Amount (µmol/mL) of carboxy group = 0.1 × volume (µL) of sodium hydroxide aqueous solution at neutralization point/apparent volume (mL) of packing material

Here, the apparent volume of the packing material is the volume measured after preparing a slurry liquid by dispersing 4 g of the packing material in water, transferring the slurry liquid to a graduated cylinder, and then allowing the same to stand for a sufficient time.

Subsequently, 4 g of the packing material was weighed into a separable flask, 20 mL of a 5 mol/L sodium hydroxide aqueous solution was added, and a hydrolysis reaction was performed at 50°C for 20 hours while stirring at 200 rpm. The mixture was cooled, then the packing material treated with sodium hydroxide was collected by filtration, then washed with a 0.1 mol/L HCl aqueous solution and water in the order presented, and the amount of a carboxy group contained in the obtained packing material was calculated by the same method as above. From the difference between the amount of a carboxy group before and after the reaction with the 5 mol/L sodium hydroxide aqueous solution, the amount of a carboxy group produced by the reaction with the 5 mol/L sodium hydroxide aqueous solution was calculated. As a result, the amount of a carboxy group produced was 24.0 µmol/mL.

If the amount of a carboxy group produced is 40 µmol/mL or less, the alkali resistance is considered to be high.

### <Evaluation of non-specific adsorption>

The obtained packing material was packed into a stainless steel column (manufactured by Sugiyama Shoji Co., Ltd.) having an inner diameter of 8 mm and a length of 300 mm by a balanced slurry method. Using the obtained column, a non-specific adsorption test was carried out by the method shown below.

The column packed with the packing material was connected to a Shimadzu Corporation HPLC system (liquid feed pump (trade name: LC-10AT, manufactured by Shimadzu Corporation), autosampler (trade name: SIL-10AF, manufactured by Shimadzu Corporation), and photodiode array detector (trade name: SPD-M10A, manufactured by Shimadzu Corporation)), and a 50 mmol/L sodium phosphate buffer as a mobile phase was passed at a flow rate of 0.6 mL/min. Using the same sodium phosphate aqueous solution as the mobile phase, their respective sample solutions of 0.7 mg/mL thyroglobulin (Mw of 6.7 × 10⁵), 0.6 mg/mL γ-globulin (Mw of 1.6 × 10⁵), 0.96 mg/mL BSA (Mw of 6.65 × 10⁴), 0.7 mg/mL ribonuclease (Mw of 1.3 × 10⁴), 0.4 mg/mL aprotinin (Mw of 6.5 × 10³), and 0.02 mg/mL uridine (Mw of 244) (all manufactured by Merck Sigma-Aldrich) are prepared, and 10 µL of each is injected from the autosampler. The elution time of each sample observed using the photodiode array detector at a wavelength of 280 nm was compared to confirm that there was no contradiction between the order of elution volume and the order of molecular weight size. When there was no contradiction between the order of the molecular weights of the samples and the order of the elution volumes thereof, there was no non-specific adsorption, which is indicated as "O" in Table 1, and when there was a contradiction therebetween, non-specific adsorption was induced, which is thus indicated as "X".

As a result, the elution volumes of the samples from the column packed with the packing material β1 were 11.437 mL, 11.841 mL, 11.883 mL, 12.094 mL, 12.262 mL, and 12.986 mL, and it was confirmed that there was no contradiction between the order of the molecular weights of the samples and the order of the elution volumes thereof and that non-specific adsorption was prevented.

### [Example 2]

A packing material β2 was obtained in the same manner as in Example 1 except that 400 g of ADEKA Pluronic (R) L44 as block copolymer represented by HO-(C₂H₄O) ₗ-(C₃H₆O)ₘ-(C₂H₄O) ₙ-H (1 is 10, m is 23, n is 10, 1 + m + n is 43, and m/(l + m + n) is 53%)) was used in the ring-opening reaction of the glycidyl group.

The alkali resistance of the obtained packing material β2 was evaluated in the same manner as in Example 1. As a result, the amount of a carboxy group produced was 23.2 µmol/mL, and it was confirmed that the packing material β2 had excellent alkali resistance.

Further, the non-specific adsorption of the obtained packing material β2 was evaluated in the same manner as in Example 1. As a result, the elution volumes of the samples were 11.188 mL, 11.570 mL, 11.687 mL, 11.906 mL, 12.077 mL, and 13.310 mL, and it was confirmed that there was no contradiction between the order of the molecular weights of the samples and the order of the elution volumes thereof and that non-specific adsorption was prevented.

### [Example 3]

A packing material β3 was obtained in the same manner as in Example 1 except that 400 g of ADEKA Pluronic (R) P123 as block copolymer represented by HO-(C₂H₄O) ₗ-(C₃H₆O)ₘ-(C₂H₄O) ₙ-H (1 is 20, m is 69, n is 20, 1 + m + n is 109, and mill + m + n) is 64%)) was used instead of ADEKA Pluronic (R) L35 in the ring-opening reaction of the glycidyl group.

The alkali resistance of the obtained packing material β3 was evaluated in the same manner as in Example 1. As a result, the amount of a carboxy group produced was 22.3 µmol/mL, and it was confirmed that the packing material β3 had excellent alkali resistance.

Further, the non-specific adsorption of the obtained packing material β3 was evaluated in the same manner as in Example 1. As a result, the elution volumes of the samples were 11.345 mL, 11.671 mL, 11.770 mL, 12.044 mL, 12.160 mL, and 13.235 mL, and it was confirmed that there was no contradiction between the order of the molecular weights of the samples and the order of the elution volumes thereof and that non-specific adsorption was prevented.

### [Example 4]

A packing material β4 was obtained in the same manner as in Example 1 except that 800 g of ADEKA Pluronic (R) F68 as block copolymer represented by HO-(C₂H₄O)ₗ-(C₃H₆O)ₘ-(C₂H₄O)ₙ-H (1 is 76, m is 29, n is 76, 1 + m + n is 182, and mill + m + n) is 16%)) was used instead of ADEKA Pluronic (R) L35 in the ring-opening reaction of the glycidyl group.

The alkali resistance of the obtained packing material β4 was evaluated in the same manner as in Example 1. As a result, the amount of a carboxy group produced was 27.6 µmol/mL, and it was confirmed that the packing material β4 had excellent alkali resistance.

Further, the non-specific adsorption of the obtained packing material β4 was evaluated in the same manner as in Example 1. As a result, the elution volumes of the samples were 10.71 mL, 11.089 mL, 11.240 mL, 11.584 mL, 11.840 mL, and 13.249 mL, and it was confirmed that there was no contradiction between the order of the molecular weights of the samples and the order of the elution volumes thereof and that non-specific adsorption was prevented.

### [Example 5]

A packing material β5 was obtained in the same manner as in Example 3 except that a porous organic polymer carrier α5 synthesized in the same manner as in Example 1 was used, and 21.5 g of glycidyl methacrylate (trade name: Blemmer G (R) manufactured by NOF Corporation), 17.6 g of ethylene glycol dimethacrylate (trade name: NK Ester 1G, SHIN-NAKAMURA CHEMICAL Co., Ltd.), 47.0 g of butyl acetate, 11.7 g of chlorobenzene, and 1.9 g of 2,2'-azobis(2,4-dimethylvaleronitrile) were used to provide an oil phase. The amount of glycidyl methacrylate used was 63.0 mol% based on the total amount of the monomers, and the amount of ethylene glycol dimethacrylate used was 37.0 mol% based on the total amount of the monomers.

The alkali resistance of the obtained packing material β5 was evaluated in the same manner as in Example 1. As a result, the amount of a carboxy group produced was 19.3 µmol/mL, and it was confirmed that the packing material β5 had excellent alkali resistance.

Further, the non-specific adsorption of the obtained packing material β5 was evaluated in the same manner as in Example 1. As a result, the elution volumes of the samples were 11.387 mL, 11.734 mL, 11.775 mL, 12.043 mL, 12.44 mL, and 12.945 mL, and it was confirmed that there was no contradiction between the order of the molecular weights of the samples and the order of the elution volumes thereof and that non-specific adsorption was prevented.

### [Example 6]

A packing material β6 was obtained in the same manner as in Example 1 except that 27.8 g of glycidyl methacrylate (trade name: Blemmer G (R) manufactured by NOF Corporation), 11.3 g of glycerol 1,3-dimethacrylate (trade name: NK Ester 701, SHIN-NAKAMURA CHEMICAL Co., Ltd.), 58.7 g of diethyl succinate, and 1.9 g of 2,2'-azobis(2,4-dimethylvaleronitrile) were used to provide an oil phase in preparation of the porous organic polymer carrier α. The amount of glycidyl methacrylate used was 79.8 mol% based on the total amount of the monomers, and the amount of glycerol 1,3-dimethacrylate used was 20.2 mol% based on the total amount of the monomers.

The alkali resistance of the obtained packing material β6 was evaluated in the same manner as in Example 1. As a result, the amount of a carboxy group produced was 25.0 µmol/mL, and it was confirmed that the packing material β6 had excellent alkali resistance.

Further, the non-specific adsorption of the obtained packing material β6 was evaluated in the same manner as in Example 1. As a result, the elution volumes of the samples were 7.58 mL, 8.232 mL, 8.465 mL, 9.075 mL, 9.531 mL, and 12.011 mL, and it was confirmed that there was no contradiction between the order of the molecular weights of the samples and the order of the elution volumes thereof and that non-specific adsorption was prevented.

### [Comparative Example 1]

A packing material β7 was obtained in the same manner as in Example 1 except that 400 g of a block copolymer represented by HO-(C₂H₄O)ₗ-(C₃H₆O)ₘ-(C₂H₄O) ₙ-H (Pluronic (R) L121 (1 is 5, m is 68, n is 5, 1 + m + n is 78, and mill + m + n) is 87%), manufactured by BASF) was used in the ring-opening reaction of the glycidyl group.

The non-specific adsorption of the obtained packing material β7 was evaluated in the same manner as in Example 1. As a result, the elution volumes of the samples were 11.557 mL, 11.584 mL, 11.585 mL, 11.866 mL, 14.750 mL, and 12.487 mL, and it was confirmed that there was a contradiction between the order of the molecular weights of the samples and the order of the elution volumes thereof and that non-specific adsorption was induced.

The alkali resistance of the obtained packing material β7 was evaluated in the same manner as in Example 1. As a result, the amount of a carboxy group produced was 11.2 µmol/mL.

### [Comparative Example 2]

A packing material β8 was obtained in the same manner as in Example 1 except that 400 g of PEG2000 (manufactured by KANTO CHEMICAL CO., INC., average molecular weight of 1900 to 2100) was used as the polyethylene glycol for the ring-opening reaction of the glycidyl group. Comparative Example 2 does not include a block structure corresponding to - (C₃H₆O)ₘ-.

The non-specific adsorption of the obtained packing material β8 was evaluated in the same manner as in Example 1. As a result, the elution volumes of the samples were 11.1702 mL, 11.5425 mL, 11.6449 mL, 11.9073 mL, 12.0849 mL, and 13.1952 mL, and it was confirmed that there was no contradiction between the order of the molecular weights of the samples and the order of the elution volumes thereof and that non-specific adsorption was prevented.

The alkali resistance of the obtained packing material β8 was evaluated in the same manner as in Example 1. As a result, the amount of a carboxy group produced in the packing material β8 was 148.3 µmol/mL.

### [Comparative Example 3]

A packing material β9 was obtained in the same manner as in Example 1 except that 37.1 g of glycidyl methacrylate (trade name: Blemmer G (R) manufactured by NOF Corporation), 2.0 g of ethylene glycol dimethacrylate (trade name: NK Ester 1G, SHIN-NAKAMURA CHEMICAL Co., Ltd.), 47.0 g of butyl acetate, 11.7 g of chlorobenzene, and 1.9 g of 2,2'-azobis(2,4-dimethylvaleronitrile) were used to provide an oil phase in preparation of the polymer α having a glycidyl group. The amount of glycidyl methacrylate used was 96.3 mol% based on the total amount of the monomers, and the amount of ethylene glycol dimethacrylate used was 3.7 mol% based on the total amount of the monomers.

The alkali resistance of the obtained packing material β9 was evaluated in the same manner as in Example 1. As a result, the amount of a carboxy group produced was 20.5 µmol/mL. Packing into a stainless steel column using the obtained packing material β9 was attempted. However, the back pressure was high, making liquid feeding difficult, and this made it impossible to carry out the packing. Therefore, non-specific adsorption could not be evaluated.

### [Comparative Example 4]

A packing material β10 was obtained in the same manner as in Example 1 except that 13.7 g of glycidyl methacrylate (trade name: Blemmer G (R) manufactured by NOF Corporation), 25.4 g of ethylene glycol dimethacrylate (trade name: NK Ester 1G, SHIN-NAKAMURA CHEMICAL Co., Ltd.), 47.0 g of butyl acetate, 11.7 g of chlorobenzene, and 1.9 g of 2,2'-azobis(2,4-dimethylvaleronitrile) were used to provide an oil phase. The amount of glycidyl methacrylate used was 42.9 mol% based on the total amount of the monomers, and the amount of ethylene glycol dimethacrylate used was 57.1 mol% based on the total amount of the monomers.

The alkali resistance of the obtained packing material β10 was evaluated in the same manner as in Example 1. As a result, the amount of a carboxy group produced was 44.3 µmol/mL.

The non-specific adsorption of the obtained packing material β10 was evaluated in the same manner as in Example 1. As a result, the elution volumes of the samples were 11.437 mL, 12.930 mL, 11.883 mL, 12.094 mL, 13.866 mL, and 12.986 mL, and it was confirmed that there was a contradiction between the order of the molecular weights of the samples and the order of the elution volumes thereof and that non-specific adsorption was induced.

It was confirmed that the exclusion limit molecular weights of the packing materials obtained in Examples 1 to 6 and Comparative Examples 1, 2, and 4 were all 1,000,000 or more.

From the above results, by adopting the configuration of the present invention, a packing material having suppressed non-specific adsorption and high alkali resistance can be obtained.

It was found that non-specific adsorption was induced in Comparative Example 1 in which the proportion of any one of l, m, and n was out of the range of the present invention, and the alkali resistance was low in Comparative Example 2 in which a block corresponding to -(C₃H₆O)ₘ- was not included.

It was found that Comparative Example 3 in which the amount of the repeating units derived from a polyfunctional monomer was too small could not be used because the back pressure of the column for size exclusion chromatography increased, and non-specific adsorption was induced in Comparative Example 4 in which the amount of the repeating units derived from a polyfunctional monomer was too large.

**[Table 1]**

| | Polymer α composition (mol%) | | |
|---|---|---|---|
| | glycidyl methacrylate | ethylene glycol dimethacrylate | glycerol 1,3-dimethacrylate |
| Example 1 | 88.7 | 11.3 | |
| Example 2 | 88.7 | 11.3 | |
| Example 3 | 88.7 | 11.3 | |
| Example 4 | 88.7 | 11.3 | |
| Example 5 | 63.0 | 37.0 | |
| Example 6 | 79.8 | | 20.2 |
| Comparative Example 1 | 88.7 | 11.3 | |
| Comparative Example 2 | 88.7 | 11.3 | |
| Comparative Example 3 | 96.3 | 3.7 | |
| Comparative Example 4 | 42.9 | 57.1 | |

**Table 1 (continued)**

| | Block copolymer | | | | | | Non-specific adsorption ²⁾ | Amount of carboxy group generated [µmol/mL] |
|---|---|---|---|---|---|---|---|---|
| | Pluronic | l | m | n | l+m+n | m/(l+m+n) (%) | | |
| Example 1 | L35 | 11 | 16 | 11 | 38 | 43 | ○ | 24.0 |
| Example 2 | L44 | 10 | 23 | 10 | 43 | 53 | ○ | 23.2 |
| Example 3 | P123 | 20 | 69 | 20 | 109 | 64 | ○ | 22.3 |
| Example 4 | F68 | 76 | 29 | 76 | 182 | 16 | ○ | 27.6 |
| Example 5 | L35 | 11 | 16 | 11 | 38 | 43 | ○ | 19.3 |
| Example 6 | L35 | 11 | 16 | 11 | 38 | 43 | ○ | 25.0 |
| Comparative Example 1 | L121 | 5 | 68 | 5 | 78 | 87 | X | 11.2 |
| Comparative Example 2 | PEG2000¹⁾ | 46 | 0 | - | 46 | 0 | ○ | 148.3 |
| Comparative Example 3 | L35 | 11 | 16 | 11 | 38 | 43 | - | 20.5 |
| Comparative Example 4 | L35 | 11 | 16 | 11 | 38 | 43 | X | 44.3 |

| | | | | | | | | |
|---|---|---|---|---|---|---|---|---|
| ¹⁾PEG2000: polyethylene glycol #2000 Since m was zero, the sum of l + n was used instead. ²⁾ O: non-specific adsorption prevented, X: non-specific adsorption observed, -: unmeasurable | | | | | | | | |

## Claims

1. A packing material, wherein one end of a block copolymer represented by the following formula 1 is bonded to a porous organic polymer carrier comprising 60 to 95 mol% of a repeating unit derived from glycidyl methacrylate and 5 to 40 mol% of a repeating unit derived from a polyfunctional monomer via an ether bond derived from a terminal hydroxyl group,
(formula 1) HO-(C₂H₄O)ₗ-(C₃H₆O)ₘ-(C₂H₄O)ₙ-H
wherein 1 is an integer of 5 to 140, m is an integer of 15 to 75, and n is an integer of 5 to 140, and a proportion of m to a sum of 1, m, and n is 5 to 85%.

2. The packing material according to claim 1, wherein the sum of 1, m, and n of the block copolymer is 30 to 330.

3. The packing material according to claim 1, wherein the polyfunctional monomer is a (meth)acryloyl-based monomer comprising two or more (meth)acryloyl groups.

4. The packing material according to claim 3, wherein the polyfunctional monomer is any of ethylene glycol dimethacrylate or glycerol 1,3-dimethacrylate.

5. The packing material according to claim 1, which has an exclusion limit molecular weight of 1,000,000 or more.

6. A method for producing the packing material according to any one of claims 1 to 5, the method comprising:
a step (A) of polymerizing a raw material monomer comprising glycidyl methacrylate and a polyfunctional monomer in the presence of a diluent and a polymerization initiator to obtain a porous organic polymer carrier α, wherein
a concentration of the polyfunctional monomer in the raw material monomer is 5 mol% to 40 mol%, and the diluent is used in a volume of 0.8 times to 4.0 times a total volume of the raw material monomer; and
a step (B) of ring-opening a glycidyl group derived from glycidyl methacrylate of the porous organic polymer carrier α with a block copolymer represented by the formula 1 to obtain a packing material β in which one end of the block copolymer represented by the formula 1 is bonded to the porous organic polymer carrier α via an ether bond derived from a terminal hydroxyl group,
(formula 1) HO-(C₂H₄O)ₗ-(C₃H₆O)ₘ-(C₂H₄O)ₙ-H
wherein 1 is an integer of 5 to 140, m is an integer of 15 to 75, and n is an integer of 5 to 140, and a proportion of m to a sum of l, m, and n is 5 to 85%.

7. A column for size exclusion chromatography, comprising a housing for liquid chromatography and the packing material according to any one of claims 1 to 5 packed into the housing for liquid chromatography.
